# EUROPEAN PATENT APPLICATION

(11) **EP 4 607 263 A1**
(43) Date of publication of application: **27.08.2025**
(21) Application number: 23898379.5
(22) Date of filing: 01.12.2023
(51) Int. Cl.: G02B 27/01, G06F 3/01

(54) **ADDITIONAL DEVICE AND ELECTRONIC DEVICE INCLUDING SAME**

(30) Priority: 02.12.2022 KR 20220166376; 12.01.2023 KR 20230004553
(71) Applicant: Samsung Electronics Co., Ltd., Suwon-si, Gyeonggi-do 16677 (KR)
(72) Inventor: PARK, Jonggyu, Suwon-si Gyeonggi-do 16677 (KR); YANG, Sungkwang, Suwon-si Gyeonggi-do 16677 (KR); YANG, Hyunmo, Suwon-si Gyeonggi-do 16677 (KR); YOON, Jongmin, Suwon-si Gyeonggi-do 16677 (KR); LIM, Gisoo, Suwon-si Gyeonggi-do 16677 (KR)
(74) Representative: HGF
(86) International application number: PCT/KR2023/019675
(87) International publication number: WO 2024/117856

(57) **Abstract**

According to an embodiment of the present disclosure, an additional device configured to enable a wearable device to be mounted thereto and/or an electronic device including same may include a first support part and cradling frames extending from the first support part to be parallel to each other. In an embodiment, the cradling frames may receive a corresponding one of wearable frames of the wearable device, so that a display part of the wearable device may be disposed to be adjacent to the first support part. Various other embodiments may be possible.

## Description

### [Technical Field]

An embodiment(s) of the disclosure relates to an accessory, e.g., an wearable accessory on a user's body with a wearable device mounted thereon.

### [Background Art]

The growth of electronics, information, and communication technologies leads to integration of various functions into a single electronic device. For example, electronic devices (e.g., smartphones) pack the functionalities of a sound player, imaging device, and scheduler, as well as the communication functionality and, on top of that, may implement more various functions by having applications installed thereon. An electronic device may not only its equipped applications or stored functions but also access, wiredly or wirelessly, a server or another electronic device to receive, in real-time, various pieces of information.

As electronic devices are put to everyday use, users' demand for portability and usability of electronic devices may increase. To meet user demand, electronic devices that may be worn on the body, such as wristwatches and glasses (hereinafter referred to as "wearable devices"), have been commercialized. Among the wearable devices, electronic devices that may be worn on the user's face may be useful in implementing virtual reality or augmented reality. For example, the wearable device may stereoscopically provide the image of the virtual space in the game played on TV or computer monitor and may implement virtual reality by blocking the real-world image. Other types of wearable devices may implement virtual images while providing an environment in which the real-world image of the space where the user actually stays may be visually perceived, thereby implementing augmented reality to provide various pieces of visual information to the user. The 'real-world image of the space' may include, e.g., an image captured by a camera or an image transmitted through a transparent lens. The 'virtual image' may include information about the space where the user resides and/or information about various things in the space.

The above-described information may be provided as background for the purpose of helping understanding of the disclosure. No claim or determination is made as to whether any of the foregoing is applicable as background art in relation to the disclosure.

### [Detailed Description of the Invention]

### [Technical Solution]

According to an embodiment of the disclosure, an accessory configured to mount a wearable device and/or an electronic device including the same may comprise a first support and cradling frames extending side by side from the first support. In an embodiment, the cradling frames may be configured to dispose a display unit of the wearable device adjacent to the first support by receiving a corresponding one of wearing frames of the wearable device.

According to an embodiment of the disclosure, an electronic device may comprise a wearable device configured to be worn on a user's body by including a display unit and wearing frames extending from the display unit and an accessory configured to be worn on the user's body and configured to mount the wearable device. In an embodiment, the accessory may include a first support and cradling frames extending side by side from the first support. In an embodiment, the cradling frames may be configured to dispose the display unit adjacent to the first support by receiving a corresponding one of the wearing frames.

### [Brief Description of Drawings]

The foregoing and other aspects, configurations, and/or advantages of an embodiment of the disclosure will be more apparent from the following detailed description taken in conjunction with the accompanying drawings.
FIG. 1 is a block diagram illustrating an electronic device in a network environment according to an embodiment of the disclosure;
FIG. 2 is a perspective view illustrating an electronic device according to an embodiment of the disclosure;
FIG. 3 is a perspective view illustrating a state in which an electronic device is worn on a user's body according to an embodiment of the disclosure;
FIG. 4 is a perspective view illustrating an accessory of an electronic device according to an embodiment of the disclosure;
FIG. 5 is a view illustrating a portion of the accessory, taken along line A-A' of FIG. 4 according to an embodiment of the disclosure;
FIG. 6 is a perspective view illustrating an accessory with a portion thereof cut away, according to an embodiment of the disclosure;
FIG. 7 is a side view illustrating an accessory of an electronic device according to an embodiment of the disclosure;
FIG. 8 is a view illustrating a portion of the accessory, taken along line B-B' of FIG. 7 according to an embodiment of the disclosure;
FIG. 9 is a perspective view illustrating an accessory among electronic devices according to an embodiment of the disclosure;
FIG. 10 is a view illustrating an example of using the accessory of FIG. 9 according to an embodiment of the disclosure;
FIG. 11 is a perspective view illustrating a portion of an accessory of an electronic device according to an embodiment of the disclosure;
FIG. 12 is a perspective view illustrating a portion of an accessory of an electronic device according to an embodiment of the disclosure;
FIG. 13 is a perspective view illustrating a charging cradle of an accessory according to an embodiment of the disclosure;
FIG. 14 is a perspective view illustrating a state in which an accessory is mounted on a charging cradle according to an embodiment of the disclosure;
FIG. 15 is a perspective view illustrating a charging cradle of an accessory according to an embodiment of the disclosure;
FIG. 16 is a perspective view illustrating a state in which an accessory is mounted on a charging cradle according to an embodiment of the disclosure;
FIG. 17 is a side view illustrating an accessory according to an embodiment of the disclosure;
FIG. 18 is an enlarged view illustrating a portion of a cradling frame of an accessory according to an embodiment of the disclosure;
FIG. 19 is an enlarged view illustrating a portion of a wearing frame of a wearable device mounted on an accessory according to an embodiment of the disclosure;
FIG. 20 is a perspective view illustrating a connection structure between an accessory and a wearable device according to an embodiment of the disclosure;
FIG. 21 is a perspective view illustrating a cable or connector of an accessory according to an embodiment of the disclosure; and
FIG. 22 is a perspective view illustrating a cable or connector of an accessory according to an embodiment of the disclosure.

Throughout the drawings, like reference numerals may be assigned to like parts, components, and/or structures.

### [Mode for Carrying out the Invention]

A wearable device (e.g., head mounted display or device (HMD)) that may be worn on the user's face or head is gradually becoming smaller and lighter, and may include a processor, a wireless communication module, and/or a battery. For example, the user may perform general communication such as voice calls or message transmission/reception using a wearable device and, while on the move, receive information about the surrounding buildings or things in real-time. The usage time of the wearable device may be limited by its battery capacity. When implementing a high-quality image such as of a virtual-reality game using a wearable device, the usage time of the wearable device may be further reduced. However, increasing the battery capacity to secure a usage time may make the wearable device heavier, resultantly deteriorating wearing comfort and increasing user fatigue.

An embodiment of the disclosure may provide an electronic device capable of increasing the usage time of a wearable device as necessary while maintaining wearing comfort of the wearable device and/or an electronic device including the same.

An embodiment of the disclosure may provide an accessory capable of comfortable use of a wearable device depending on a use environment and/or an electronic device including the same.

Objects of the disclosure are not limited to the foregoing, and other unmentioned objects would be apparent to one of ordinary skill in the art from the following description.

The following description taken in conjunction with the accompanying drawings may provide an understanding of various exemplary implementations of the disclosure, including claims and their equivalents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and brevity.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may be interpreted as including one or more of the surfaces of a component.

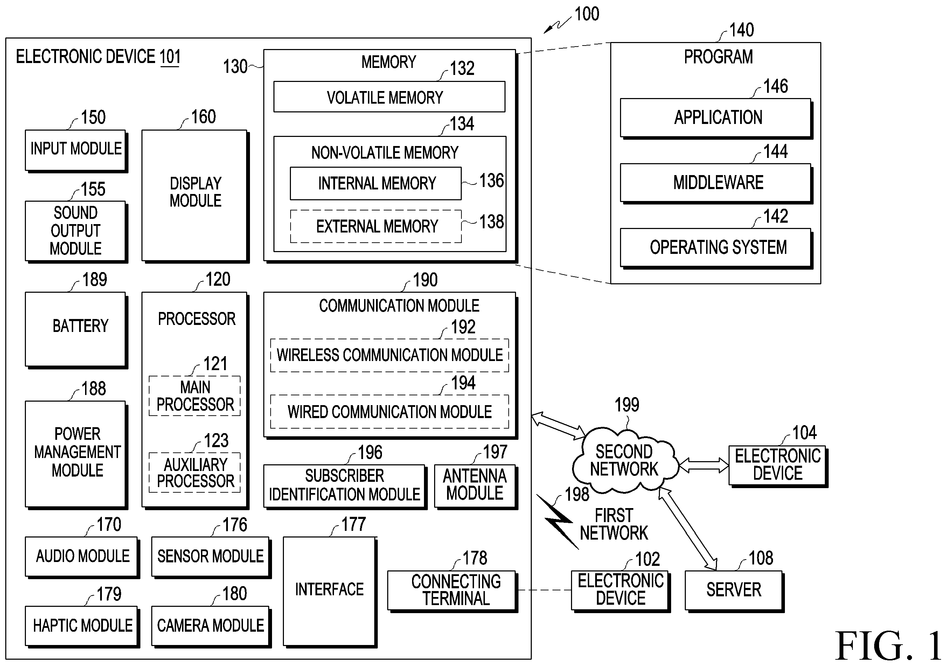

FIG. 1 is a block diagram illustrating an electronic device 101 in a network environment 100 according to an embodiment of the disclosure. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiment(s) of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

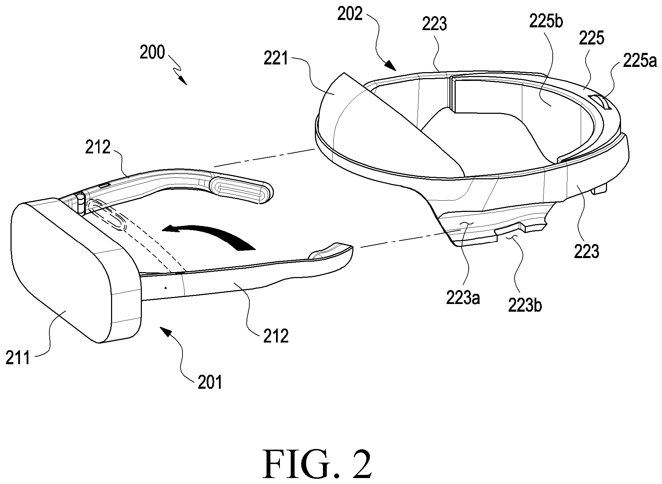

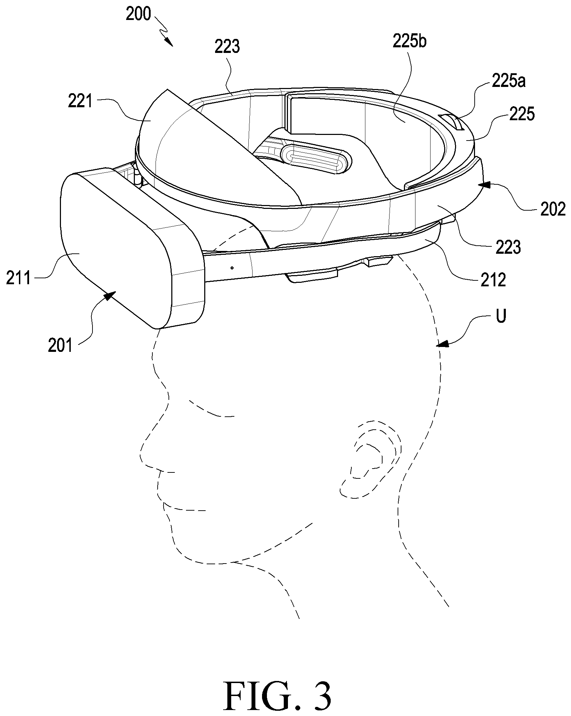

FIG. 2 is a perspective view illustrating an electronic device 200 according to an embodiment of the disclosure. FIG. 3 is a perspective view illustrating a state in which an electronic device 200 is worn on a user U's body according to an embodiment of the disclosure.

Referring to FIGS. 2 and 3, an electronic device 200 (e.g., the electronic device 101 of FIG. 1) may include a wearable device 201 and an accessory 202. In an embodiment, the wearable device 201 may be used with itself worn on the user's body or, when necessary, the user U may wear and use the wearable device 202 with the wearable device 201 mounted on the accessory 202. For example, the user U may use the wearable device 201 with the wearable device 201 worn when on the move outdoors and, when playing virtual reality game indoors, further utilize the accessory 202. **In** an embodiment, the wearable device 201 itself may be understood as the electronic device 101 of FIG. 1. **In** an embodiment, the accessory 202 itself may be understood as the electronic device 101 of FIG. 1. **In** an embodiment, a combination of the wearable device 201 and the accessory 202 in a state in which the wearable device 201 is mounted on the accessory 202 may be understood as the electronic device 101 of FIG. 1.

According to an embodiment, the wearable device 201 is a device that may be worn on the face or head of the user U, and may include a display unit 211 and at least one wearing frame 212. For example, in a state in which the wearable device 201 is worn on the user U body, the display unit 211 may be disposed in a direction toward the user U's face (e.g., eyes). When wearing the wearable device 201, the user U's nose or ear may support at least a portion of the wearable device 201. In an embodiment, the display unit 211 and the wearing frame 212 may have a closed curve shape, and in this case, the wearable device 201 may be worn in a state substantially surrounding the user's head. In the illustrated embodiment, a configuration in which a pair of wearing frames 212 extend side by side from the display unit 211 is illustrated. The wearing frames 212 may be substantially folded on the display unit 211 by at least partially rotating with respect to the display unit 211. For example, in a state in which the wearing frames 212 are folded on the display unit 211, it may be convenient to carry. When the wearable device 201 is to be worn, the user may unfold the wearing frames 212 to align them side by side.

Although not illustrated, in a structure (e.g., hinge structure) for rotatably coupling the wearing frame 212 to the display unit 211, the wearable device 201 may further include an elastic member (e.g., a torsion spring). In a state in which the wearable device 201 is worn on the user U's body, the elastic member may bring the wearing frame 212 into tight contact with the user body. For example, the elastic member may provide an elastic force so that the wearable device 201 may be stably worn. In an embodiment, the elastic member may allow the wearing frames 212 to rotate in a direction farther away from a designated position (a state worn on the user U's body). For example, the elastic member may prevent damage to the wearable device 201 by allowing the wearing frames 212 to rotate in a direction farther from each other depending on the size of the user's body (e.g., head). In an embodiment, when the wearable device 201 is mounted or coupled to the accessory 202, the elastic member may allow the wearing frames 212 to rotate in a direction farther from each other. In an embodiment, when the wearable device 201 is mounted or coupled to the accessory 202, the elastic member may bring the wearing frames 212 into tight contact with the cradling frame 223 by providing an elastic force. For example, the elastic member may allow the position of the wearing frame 212 to be adjusted to correspond to the body size of the user U or the specifications of the accessory 202. In an embodiment, the elastic force provided by the elastic member in a state in which the wearable device 201 is worn on the user's body or mounted on the accessory 202 may suppress movement of the wearable device 201 by bringing the wearing frame 212 in tight contact with the user's body or the cradling frame 223. When the wearable device 201 is to be separated from the accessory 202, the user may separate the wearing frame 212 from the cradling frames 223 by forcing the wearing frames 212 in a direction farther from each other.

According to an embodiment, the display unit 211 may include a display such as a liquid crystal display (LCD), a digital mirror display (DMD), a liquid crystal on silicon (LCoS), an organic light emitting diode (OLED), or a micro light emitting diode (LED). Although not illustrated, when the display unit 211 includes one of a liquid crystal display, a digital mirror display, or a silicon liquid crystal display, the wearable device 201 and/or the electronic device 200 may include a light source that irradiates light to a screen output area. In an embodiment, when the display itself may generate light, such as an organic light emitting diode or a micro LED, the wearable device 201 and/or the electronic device 200 may provide a good quality virtual image to the user even if it does not include a separate light source. In an embodiment, when the display is implemented as an organic light emitting diode or a micro LED, the light source may be omitted, and the wearable device 201 and/or the electronic device 200 may be lightened.

According to an embodiment, the wearable device 201 and/or the display unit 211 may include a display not illustrated, a first transparent member, and/or a second transparent member, and the user U may use the wearable device 201 and/or the electronic device 200 with it worn on the face. The first transparent member and/or the second transparent member may be formed of a glass plate, a plastic plate, or a polymer, and may be manufactured to be transparent or translucent. According to an embodiment, the first transparent member may be disposed to face the right eye of the user U, and the second transparent member may be disposed to face the left eye of the user U. For example, the display unit 211 may combine a real-world image transmitted through the first transparent member and the second transparent member, and a virtual image implemented by the wearable device 201 and provide the same to the user. In an embodiment, the real-world image may be obtained through a plurality of cameras to be described below, and the obtained real-world image and virtual image may be combined and provided to the user. When the real-world image is obtained through the camera, the first transparent member and the second transparent member may be omitted or substantially opaque.

According to an embodiment, when the wearable device 201 includes the first transparent member and the second transparent member, the transparent display may be disposed at a position facing the user's eyes to form a screen display unit. In an embodiment, the wearable device 201 and/or the display unit 211 may guide the output image to the user's eyes by performing focus adjustment using the lens(s). For example, the wearable device 201 and/or the display unit 211 may perform focus adjustment so that the user may recognize the screen output from the display. The display and the lens(s) may be variously combined, and additional optical elements such as a light waveguide may be disposed according to the specifications of the wearable device 201 and/or the display unit 211 to be actually manufactured.

Although not illustrated, the wearable device 201 and/or the display unit 211 may include a plurality of cameras. The plurality of cameras may obtain an image of the space in which the user is positioned or an object around the user. In an embodiment, the plurality of cameras may track or detect the movement of the user U's body (e.g., head or hand), the user U's gaze, and/or the user U's facial expression. Further, the wearable device 201 and/or the display unit 211 may use lighting when detecting the gaze or facial expression of the user U by including lighting. In an embodiment, the wearable device 201 may further include a printed circuit board, a battery, a microphone, a speaker, an antenna, and/or various sensors. According to an embodiment, the components listed above may be appropriately distributed and disposed on the display unit 211 or the wearing frame(s) 212 considering the load applied to the user's body in the worn state.

According to an embodiment, the wearable device 201 may communicate with an external device (e.g., the electronic device 102 or 104 or the server 108 of FIG. 1), such as a smartphone, a tablet PC, a personal computer, and/or a home server over a network (e.g., the first network 198 or the second network 199 of FIG. 1). Each of the external electronic devices 102 and 104 may be the same type of device as, or a different type of device from, the wearable device 201. In an embodiment, the external electronic devices 102 and 104 may be implemented in various forms, such as a case capable of storing and charging a smartphone or a wearable device 201.

According to an embodiment, all or some of the operations executed in the wearable device 201 may be executed in one or more of the external electronic devices 102 and 104 or the server 108. For example, if the wearable device 201 should perform a function or a service automatically, or in response to a request from a user or another device, the wearable device 201, instead of, or in addition to, executing the function or the service, may request one or more external devices (e.g., the electronic device 102 or 104 or the server 108 of FIG. 1) to perform at least part of the function or the service. The one or more external devices receiving the request may perform the at least part of the function or the service requested, or an additional function or an additional service related to the request, and transfer an outcome of the performing to the wearable device 201. The wearable device 201 may provide the outcome, with or without further processing of the outcome, as at least part of a reply to the request. For example, the external device may render the content data executed by the application and transfer it to the wearable device 201, and the wearable device 201 receiving the data may output the content data through the display unit 211. When the wearable device 201 detects the user movement through the IMU sensor, the processor (e.g., the processor 120 of FIG. 1) of the wearable device 201 may correct the rendering data received from the external device based on the movement information and output the same through the display unit 211. Alternatively, the processor of the wearable device 201 may transfer the movement information to the external device to request rendering so that screen data is updated accordingly.

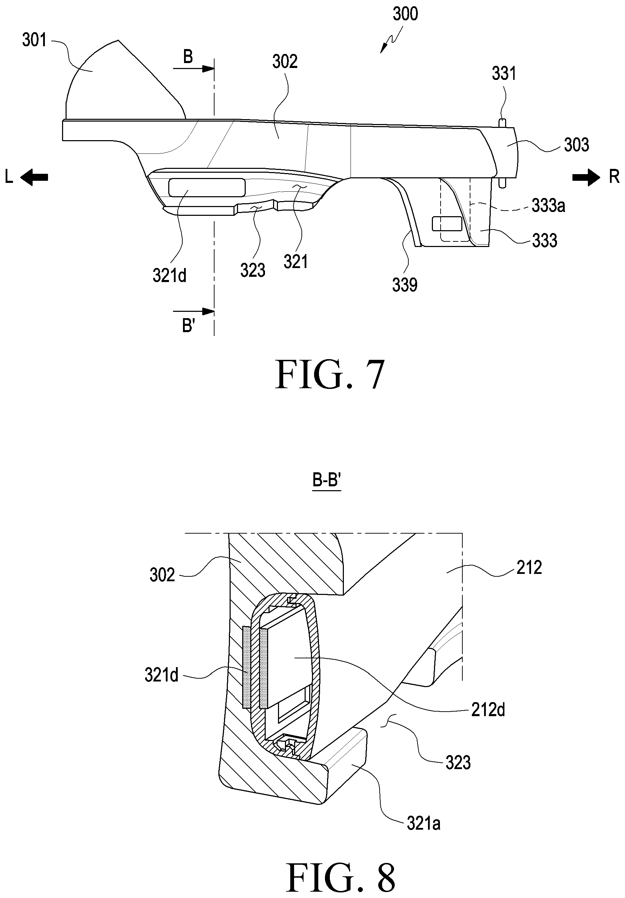

According to an embodiment, the accessory 202 may include a battery (e.g., the battery 189 or 333a of FIG. 1 or 7), providing operating power and/or charging power to the wearable device 201 while the wearable device 201 is mounted. For example, the wearable device 201 may be mounted on the accessory 202, receiving external power while being worn on the user U's body or in the operation state. As described above, in the accessory 202 and/or the electronic device 200 including the accessory 202 according to an embodiment(s) of the disclosure, the wearable device 201 itself may be worn and, as necessary, the wearable device 201 may be mounted on the accessory 202 to assist the operation of the wearable device 201. Here, "assisting the operation of the wearable device 201" may include providing a further advanced network (e.g., the first network 198 or the second network 199 of FIG. 1) in communication with the external device (e.g., the electronic device 102 or 104 of FIG. 1) as well as providing auxiliary power by the accessory 202. In an embodiment, the accessory 202 may additionally provide components such as an auxiliary memory (e.g., the memory 130 of FIG. 1) or a speaker (e.g., the sound output module 155 of FIG. 1) to the wearable device 201. For example, when the wearable device 201 is mounted on the accessory 202, additional functions may be provided or enhanced operating performance may be implemented.

According to an embodiment, the accessory 202 may include a first support 221 and cradling frames 223 extending side by side from the first support 221. The accessory 202 is a device used in a state of being substantially worn on the user U's head, and the cradling frame(s) 223 may function as a structure for wearing the accessory 202 on the user U's body. In an embodiment, the cradling frame(s) 223 may at least partially receive or dispose a corresponding one of the wearing frames 212 of the wearable device 201. For example, the wearable device 201 itself may be worn on the user U's body or, according to the user U's need, the wearable device 201 may be disposed on the user U's body while being mounted on the accessory 202. According to an embodiment, when the wearable device 201 is mounted on the accessory 202, the display unit 211 may be disposed adjacent to the first support 221. In an embodiment, in a state in which the accessory 202 is worn on the user U's body, the first support 221 may substantially contact or, be supported on, the forehead of the user U. For example, the accessory 202 may align at least a portion of the display unit 211 toward the user's face (e.g., eyes) in a state in which the wearable device 201 is mounted.

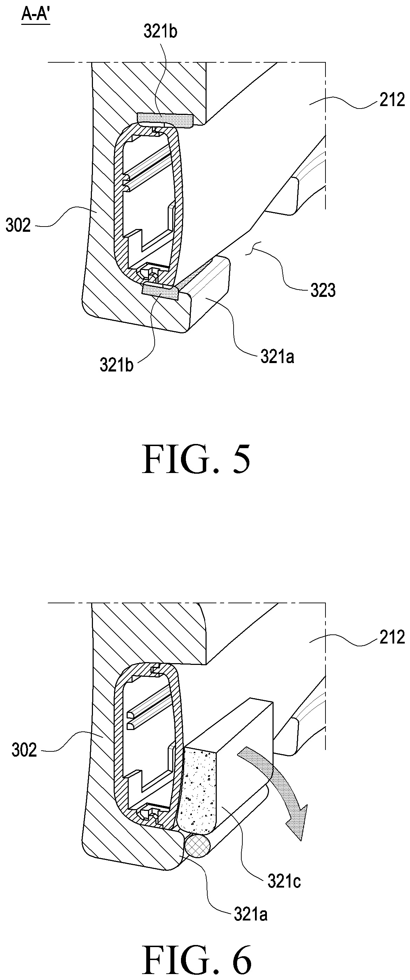

According to an embodiment, the accessory 202 may further include binding grooves 223a provided in the cradling frames 223. In an embodiment, the cradling frame 223 may substantially receive or bind at least a portion of the wearing frame 212 using the binding groove 223a. For example, the binding groove 223a extends in one direction from the surface of the cradling frame 223, and the wearing frame 212 may be received or coupled to the binding groove 223a in the form of being inserted along the direction in which the binding groove 223a extends. For example, as the wearing frame 212 is inserted or received in the binding groove 223a, the wearable device 201 may be substantially fixed to the accessory 202 in a direction other than the direction in which the binding groove 223a extends. As is described below, the accessory 202 may stably mount or position the wearable device 201 by increasing frictional force or using a magnetic force. In an embodiment, the binding grooves 223a may be provided in the outer surfaces of the cradling frames 223. For example, the binding grooves 223a may be exposed to external spaces in opposite directions on the accessory 202. In an embodiment, the accessory 202 and/or the cradling frames 223 may further include an avoidance recess 223b connected to the binding groove 223a. In an embodiment, the avoidance recess 223b may be provided on one side of the binding groove 223a to be aligned with at least a portion of the wearing frame 212 when the wearable device 201 is mounted on the accessory 202. For example, the avoidance recess 223b may provide a space for disposing a structure (e.g., the second pressing member 321c of FIG. 6) for disposing the wearing frame 212 or a line space for wired connection between the wearing frame 212 and the accessory 202.

According to an embodiment, the accessory 202 may further include a second support 225 coupled to end portions of the cradling frames 223. For example, the second support 225 may substantially connect end portions of the cradling frames 223. Thus, the first support 221, the cradling frames 223, and/or the second support 225 may be arranged to substantially form a closed loop shape. In an embodiment, when the first support 221 is supported by the user U's head (e.g., forehead) from the front, the second support 225 may be substantially supported on the rear of the user U's head. For example, the accessory 202 may be worn in a state of substantially surrounding the user U's head, and the worn state of the accessory 202 may be stably maintained by the first support 221 and the second support 225.

According to an embodiment, the second support 225 may slide with respect to at least one of the cradling frames 223. For example, the shape or size of the accessory 202 may be adjusted according to the shape or size of the user U's body. Although not illustrated, the cradling frame(s) 223 and the second support 225 may be connected through a rack-pinion gear combination to be slidably coupled to each other. For example, an adjustment dial 225a provided with a pinion gear may be disposed on the second support 225, and the second support 225 may slide with respect to at least one of the cradling frames 223 according to the rotation of the adjustment dial 225a. In an embodiment, the cradling frames 223 may be provided with rack gears that are disposed symmetrically with respect to each other and engaged with the pinion gears (e.g., the pinion gear provided on the adjustment dial 225a), allowing the cradling frames 223 to move in operations opposite to each other as the adjustment dial 225a rotates. For the adjustment structure, the configurations disclosed in Korean Patent Application Publication No. 10-2022-0011323 (published on January 28, 2022) and International Patent Application Publication No. 2022/019452 (published on January 27, 2022) may be referenced, and no further detailed description is given of the adjustment structure.

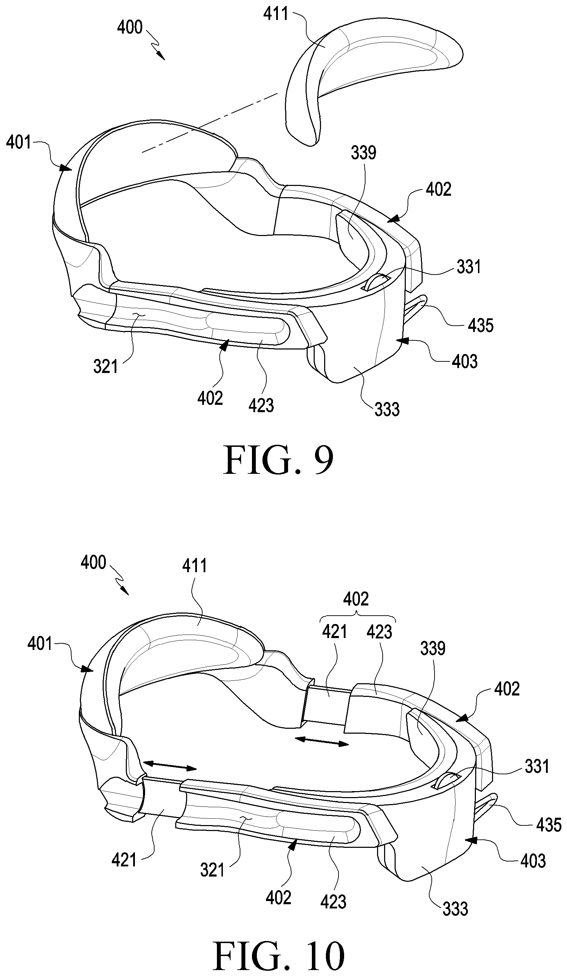

According to an embodiment, the accessory 202 may further include at least one cushion member (e.g., the first cushion member 411 of FIG. 9 or the second cushion member 225b of FIG. 2). For example, the cushion members 411 and 225b are structures that are in direct contact with the user U's body, and may include a low-density elastic body such as sponge, or a material such as a fabric, a polymer material, or leather. In an embodiment, the cushion members 411 and 225b may be disposed on the first support 221 and/or the second support 225. For example, the first cushion member 411 may be substantially provided as a portion of the first support to contact the user U's body (e.g., head) at the front, and the second cushion member 225b may be provided as a portion of the second support 225 to contact the rear of the user U's body.

According to an embodiment, the accessory 202 and/or the second support 225 may further include a battery (e.g., the battery 189 or 333a of FIG. 1 or FIG. 7) received in the second support 225. The batteries 189 and 333a are rechargeable secondary batteries, e.g., and may be charged by receiving external power, and the accessory 202 may be configured to supply power from the batteries 189 and 333a to the wearable device 201. In providing external power to the batteries 189 and 333a, the accessory 202 and/or the second support 225 may further include a connection terminal (e.g., the connection terminal 178 of FIG. 1) and/or an antenna module (e.g., the antenna module 197 of FIG. 1). For example, the batteries 189 and 333a may be charged by receiving external power source in a wired or wireless manner.

In the following embodiments, the components easy to understand from the description of the above embodiments may be denoted with or without the same reference numerals and their detailed description may be skipped. In the drawings of embodiment(s) to be described below, the wearable device is substantially omitted, and the wearable device 201 of FIGS. 2 and 3 may be referenced as necessary.

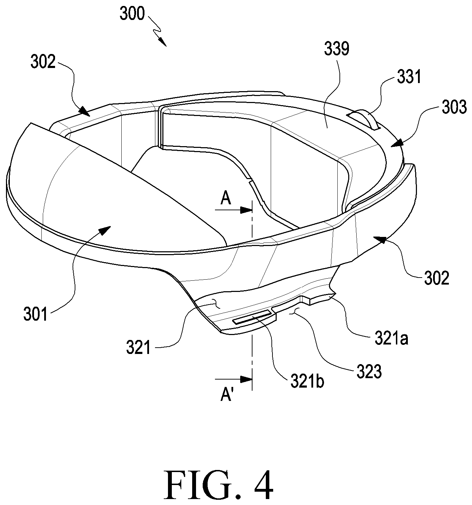

FIG. 4 is a perspective view illustrating an accessory 300 of an electronic device (e.g., the electronic device 200 of FIG. 2) according to an embodiment of the disclosure. FIG. 5 is a view illustrating a portion of the accessory 300, taken along line A-A' of FIG. 4 according to an embodiment of the disclosure.

Referring to FIGS. 4 and 5, an accessory 300 (e.g., the accessory 202 of FIG. 2) may include a first support 301 (e.g., the first support 221 of FIG. 2), a cradling frame(s) 302 (e.g., the cradling frame(s) 223 of FIG. 2), a second support 303 (e.g., the second support 225 of FIG. 2), an adjustment dial 331 (e.g., the adjustment dial 225a of FIG. 2), a cushion member 339 (e.g., the first cushion member 411 of FIG. 9 or the second cushion member 225b of FIG. 2). The configuration of the accessory 300 may be similar to that of the accessory 202 of FIG. 2 or 3, and a detailed description thereof is omitted.

According to an embodiment, the accessory 300 may stably mount or dispose the wearable device 201 by further including a pressing member(s) 321b. For example, the pressing member 321b may be disposed on the binding groove 321 (e.g., the binding groove 223a of FIG. 2), and when the wearing frame 212 is received in the binding groove 321, maintain the state in which the wearing frame 212 is received in the binding groove 321. In an embodiment, the pressing member 321b may be formed of an elastic body such as sponge, silicone, or rubber and, when contacting the wearing frame 212, be compressed to press the wearing frame 212. As the pressing member 321b presses the wearing frame 212, the wearing frame 212 may tightly contact the pressing member 321b and/or a portion of the inner surface of the binding groove 321 to be stably fixed. In an embodiment, the pressing member 321b may include a material having a high stopping frictional force to prevent the wearing frame 212 from coming off the binding groove 321. The material of the pressing member 321b may be selected considering convenience of the mounting or removing operation while stably maintaining the mounting state of the wearable device 201.

Although not illustrated, the pressing member 321b may be implemented as a plurality of protrusions (e.g., embossing) protruding from the inner wall of the binding groove 321. In an embodiment, the plurality of protrusions functioning as the pressing member 321b may be formed of an elastic body such as silicon or rubber. In an embodiment, at least a portion of the surface, in contact with the wearing frame 212, of the plurality of protrusions functioning as the pressing member 321b may be coated with an elastic body such as silicon or rubber. In an embodiment, the pressing member 321b may be at least partially disposed outside the binding groove 321, or may be replaced with another pressing member disposed outside the binding groove 321. The other pressing member disposed outside the binding groove 321 is described again with reference to FIG. 6.

According to an embodiment, a pair of pressing members 321b may be disposed to face each other in the binding groove 321. For example, when the wearable device 201 is mounted on the accessory 300, a portion of the wearing frame 212 may be substantially disposed between the pressing members 321b. The pressing members 321b may contact the wearing frame 212 and be compressed to a designated degree, thereby stably maintaining a state in which the wearing frame 212 is stably positioned in the binding groove 321.

According to an embodiment, the avoidance recess 323 (e.g., the avoidance recess 223b of FIG. 2) may be provided by partially removing the sidewall 321a forming (defining) a portion of the binding groove 321. For example, a portion of the wearing frame 302 may be exposed to the external space through the avoidance recess 323 while being positioned in the binding groove 321. In an embodiment, at least one of the wearing frames 212 may include a connector (e.g., the connection terminal 178 of FIG. 1) not illustrated, and the connector may be positioned corresponding to the avoidance recess 323 when the wearable device 201 is mounted on the accessory 300. For example, when the wearable device 201 mounted on the accessory 300 connects to an external device, the avoidance recess 323 may provide a line space for wired connection. In an embodiment, when the accessory 300 has a structure of being wiredly connected to the wearable device 201, the avoidance recess 323 may provide a space in which a cable extending from the accessory 300 is disposed.

FIG. 6 is a cross-sectional, perspective view illustrating a portion of an accessory (e.g., the accessory 300 of FIG. 4) according to an embodiment of the disclosure.

Referring to FIG. 6, the accessory 300 may include a second pressing member 321c rotatably disposed on the cradling frame 302 at a position adjacent to the binding groove 321. For example, in a state in which the wearable device 212 is mounted on the accessory 300, the second pressing member 321c may fix the wearing frame 212 in tight contact with the wearing frame 212. In an embodiment, the wearable device 201 (e.g., the wearing frame 212) may be easily separated from the cradling frame 302 by rotating the second pressing member 321c in the direction of the arrow illustrated in FIG. 6. In a state in which the second pressing member 321c tightly contacts the wearing frame 212, the wearing frame 212 may come in tight contact with the inner surface of the binding groove 321, so that the wearable device 201 may stably maintain a state mounted on the accessory 300.

FIG. 7 is a side view illustrating an accessory 300 of an electronic device (e.g., the electronic device 200 of FIG. 2) according to an embodiment of the disclosure. FIG. 8 is a view illustrating a portion of the accessory 300, taken along line B-B' of FIG. 7 according to an embodiment of the disclosure.

According to an embodiment, the pressing members 321b and 321c of FIGS. 5 and 6 may be replaced with a magnetic body, e.g., a permanent magnet 321d, or may be combined with the permanent magnet 321d to further stabilize the mounting state of the wearable device 201. FIGS. 7 and 8 disclose an example in which the electronic device 200 and/or the accessory 300 includes a permanent magnet 321d.

Referring to FIGS. 7 and 8, the accessory 300 (e.g., the accessory 202 of FIG. 2) may further include a permanent magnet 321d disposed adjacent to the binding groove 321 or disposed substantially in the binding groove 321. For example, when the wearing frame 212 of the wearable device 201 is a magnetic body or includes a second permanent magnet 212d, the accessory 300 may include a permanent magnet 321d corresponding to a portion (or the second permanent magnet 212d) of the wearing frame 212. In an embodiment, when the wearable device 201 is mounted on the accessory 300, an attraction force may be generated between the permanent magnet 321d and a portion (or the second permanent magnet 212d) of the wearing frame 212, thereby stably binding or fixing the wearable device 201 to the accessory 300. In an embodiment, regardless of whether the permanent magnet 321d is disposed, the accessory 300 may include at least one of the pressing members 321b and 321c of FIGS. 5 and 6. By combining the permanent magnet 321d and the pressing member(s) 321b and 321c of FIG. 5 and/or FIG. 6, the mounting state of the wearable device 201 may be further stabilized.

According to an embodiment, when the wearable device 201 is mounted on the accessory 300, the display unit 211 may be disposed on the left side L, and the battery 333a and/or the second support 303 (e.g., the casing 333) in which the battery 333a is received may be disposed on the right side R with respect to the state illustrated in FIG. 7. For example, by appropriately selecting the positions of the display unit 211 and the battery 333a, the load applied to the body of the user U may be distributed in a state in which the user U wears the wearable device 201 and the accessory 300.

FIG. 9 is a perspective view illustrating an accessory 400 of an electronic device (e.g., the electronic device 200 of FIG. 2) according to an embodiment of the disclosure. FIG. 10 is a view illustrating an example of using the accessory 400 of FIG. 9 according to an embodiment of the disclosure.

According to an embodiment of the disclosure, in the electronic device 200 and/or the accessory 400 (e.g., the accessory 202 of FIG. 2), the cushion member(s) 411 and 339 may be replaced, or the length of the cradling frame 402 may be adjusted. For example, the size or shape of the electronic device 200 and/or the accessory 400 may be adjusted according to the shape or size of the user U's body and/or the specifications of the wearable device 201. Accordingly, the electronic device 200 according to an embodiment(s) of the disclosure may provide better wearing comfort while suppressing the user U's fatigue even when wearing the accessory 400 with the wearable device 201 mounted. As illustrated in FIGS. 9 and 10, an accessory 400 may include a first support 401 (e.g., the first support 221 of FIG. 2), a cradling frame(s) 402 (e.g., the cradling frame(s) 223 of FIG. 2), a second support 403 (e.g., the second support 225 of FIG. 2), an adjustment dial 331, and cushion members 411 and 339. The above-listed components may be similar to those of the above-described accessories 202 and 300, and thus a detailed description thereof is omitted.

Referring to FIG. 9, the first cushion member 411 (or the second cushion member 339) of the accessory 400 may be replaced. For example, when the first cushion member 411 is disposed inside the first support 401, a coupling structure such as Velcro may be provided, so that a first cushion member 411 having a shape and size desired by the user U may be selected and disposed inside the first support 401. When the coupling structure such as Velcro is provided, upon wearing the accessory 400, the user U may select the position of the first cushion member 411 on the first support 401. For example, the user U may dispose the accessory 400 at a position comfortable to the user and wear it. It may be easily understood by those skilled in the art that the configuration related to the disposition of the first cushion member 411 may be similarly implemented in the second cushion member 339.

Since the shape or size of the wearable device 201 to be actually manufactured and/or preferred by the user U may vary, there may be a difference in compatibility between the wearable device 201 and the accessory 400. Referring to FIG. 10, the accessory 400 may be compatible with wearable devices 201 having different shapes or sizes. For example, the cradling frame(s) 402 may be deformed to correspond to the size of the wearable device 201 (e.g., the length of the wearing frame 212) by including a guide frame 421 and a slide frame 423. The guide frame 421 may extend from, e.g., the first support 401, and the slide frame 423 may be coupled to the guide frame 421 to slide in the length direction of the guide frame 421. For example, the slide frame 423 may move farther from the first support 401 or closer to the first support 401 by sliding while being guided by the guide frame 421.

According to an embodiment, when the slide frame 423 moves farther from the first support 401, a wearable device 201 having a large length of the wearing frame 212 may be easily mounted on the accessory 400 (e.g., the accessory 202 of FIG. 2). In an embodiment, when the slide frame 423 approaches the first support 401, a wearable device 201 having a small length of the wearing frame 212 may be easily mounted on the accessory 400. In an embodiment, when the slide frame 423 slides in a state in which the wearable device 201 is mounted on the accessory 400, the distance between the display unit 211 and the user U's face (e.g., eyes) may be adjusted. For example, when viewing clearer images, the user U may dispose or wear the display unit 211 at an appropriate position by adjusting the length of the cradling frame 402. In an embodiment, the user U may adjust or select the position of the display unit 211 on the face by sliding the second support 403 with respect to the cradling frame 402 (e.g., the slide frame 423) using the adjustment dial 331.

As such, the electronic device 200 and/or the accessory 202, 300, or 400 according to an embodiment(s) of the disclosure may provide a comfortable use environment to the user U by implementing the cushion member(s) 411 and 339 to be replaceable and facilitating the position adjustment of the wearable device 201 (e.g., the display unit 211) on the face. In an embodiment, when the wearable device 201 is mounted on the accessory 202, 300, or 400, performance or function may be enhanced or expanded by the assistance of the accessory 202, 300, or 400.

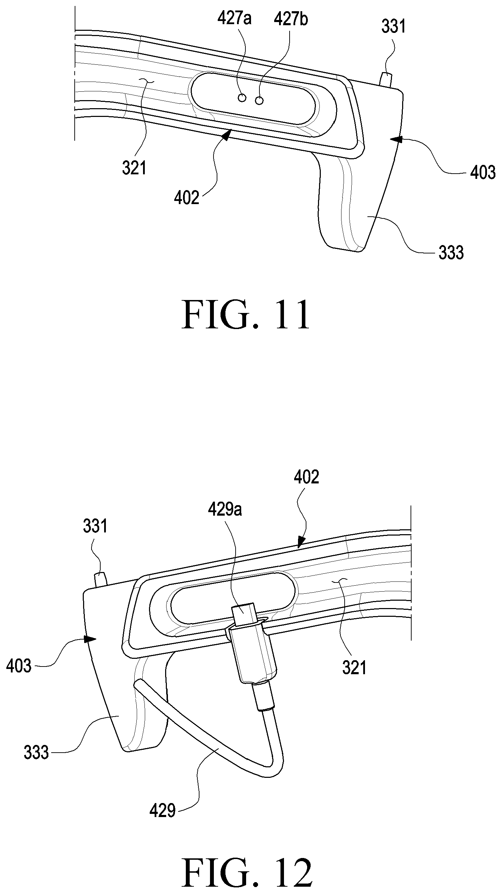

FIG. 11 is a perspective view illustrating a portion of an accessory (e.g., the accessory 202, 300, or 400 of FIGS. 2 to 10) of an electronic device (e.g., the electronic device 200 of FIG. 2) according to an embodiment of the disclosure. FIG. 12 is a perspective view illustrating a portion of an accessory 400 of an electronic device 200 according to an embodiment of the disclosure.

According to an embodiment of the disclosure, the accessory 400 may be electrically connected to the mounted wearable device 201 by further including at least one contact terminal(s) 427a and 427b and/or the cable 429. For example, referring to FIG. 11, the accessory 400 may include contact terminal(s) 427a and 427b exposed inside the binding groove 321. The contact terminal(s) 427a and 427b may contact the counterpart based on an elastic force, such as of a pogo pin or a C-clip. Here, the term "counterpart" may be a contact pad(s) (not illustrated) provided on the wearing frame 212 of the wearable device 201.

According to an embodiment, when the wearable device 201 is mounted on the accessory 400, the contact terminal(s) 427a and 427b may electrically contact any one of the wearing frames 212. In an embodiment, the contact terminal(s) 427a and 427b may be electrically connected to a battery (e.g., the batteries 189 and 333a of FIG. 1 or 7) through a line provided inside the cradling frame 402 and/or the second support 403. For example, when the wearable device 201 is mounted, the accessory 400 may provide operating power and/or charging power to the wearable device 201 through the contact terminal(s) 427a and 427b.

Referring to FIG. 12, the accessory 400 may include a cable 429 extending from the second support 403 (e.g., the casing 333). The cable 429 is electrically connected to the battery (e.g., the battery 189 or 333a of FIG. 1 or 7) inside the second support 403 (e.g., the casing 333), and may connect to the wearable device 201 (e.g., the wearing frame 212) through a connector 429a provided at an end portion. In an embodiment, when the wearable device 201 is mounted on the accessory 400, the cable 429 (e.g., the connector 429a) may be connected to the wearing frame 212 through an avoidance recess (e.g., the avoidance recess 323 of FIG. 4). When the wearable device 201 is mounted, the accessory 400 may provide operating power and/or charging power to the wearable device 201 through the cable 429 and/or the connector 429a. For example, the cable 429 may be configured to supply power between the battery 333a and the wearing frame 212.

According to an embodiment, the wearable device 201 may include a battery embedded in each of the pair of wearing frames 212. In an embodiment, the accessory 400 may include contact terminals 427a and 427b respectively provided in the cradling frames 402 and/or the cable 429. For example, the accessory 400 may provide an electrical connection structure between the first cradling frame of the cradling frames 402 and the first wearing frame of the wearing frames 212 and provide an electrical connection structure between the second cradling frame of the cradling frames 402 and the second wearing frame of the wearing frames 212. In an embodiment, the accessory 400 may include contact terminals 427a and 427b provided to the first cradling frame among the cradling frames 402, and the cable 429 provided to the second cradling frame among the cradling frames 402. Although not illustrated, the accessory 400 may include a wireless power transmission antenna embedded in at least one of the cradling frames 402. For example, the accessory 400 may provide power to the wearable device 201 in a wireless manner. When the accessory 400 includes the wireless power transmission antenna, the contact terminals 427a and 427b and/or the cable 429 may be omitted. In an embodiment, the accessory 400 may provide power to wearable device(s) having different electrical connection structures by including all of the contact terminals 427a and 427b, the cable 429, and/or the wireless power transmission antenna.

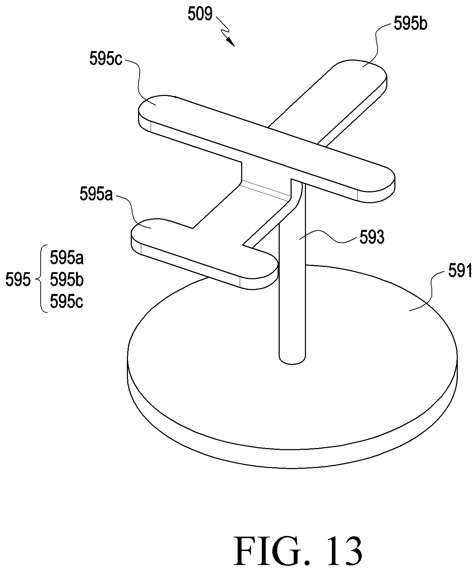

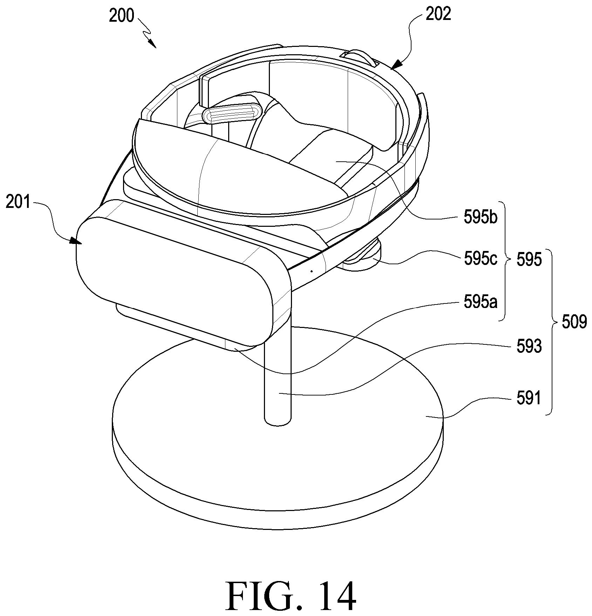

FIG. 13 is a perspective view illustrating a charging cradle 509 of an accessory 202 according to an embodiment of the disclosure. FIG. 14 is a perspective view illustrating a state in which an accessory 202 is mounted on a charging cradle 509 according to an embodiment of the disclosure.

Referring to FIGS. 13 and 14, a charging cradle 509 may be used to store the electronic device 200 and/or the accessory 202. The charging cradle 509 may include a base part 591, a connecting part 593, and/or a disposing part 595 (or a seating part). The base part 591 is, e.g., a portion disposed on a plane such as a table or a floor and may have a designated weight to lower the center of gravity of the charging cradle 509. In an embodiment, when the charging cradle 509 provides charging power for the accessory 202, a circuit device (e.g., a charging circuit) of the charging cradle 509 may be disposed on the base part 591. The connecting part 593 may extend upward from the base part 591 and may have a length capable of disposing the accessory 202 at a designated height from the plane or the base part 591 when the accessory 202 is mounted. The disposing part 595 may be disposed at an upper end of the connecting part 593, and thus may be connected to the base part 591 through the connecting part 593. The disposing part 595 is a portion that substantially disposes or supports the accessory 202, and may support the accessory 202 in a substantially fixed state, and in this case, the disposing part 595 may be referred to as a 'mounting part'.

According to an embodiment, the disposing part 595 may include a first disposing part 595a, a second disposing part 595b, and/or a third disposing part 595c. When the accessory 202 is disposed on the charging cradle 509, the first disposing part 595a may support, e.g., the first support 221 or the display unit 211. In an embodiment, when the accessory 202 is disposed on the charging cradle 509 without the wearable device 201 being mounted on the accessory 202, the first disposing part 595a may not support any portion of the accessory 202. For example, as the second support 225 is supported in contact with the second disposing part 595b in a state in which the accessory 202 is disposed on the disposing part 595, and the cradling frame 223 is supported on the third disposing part 595c, the first support 221 may be positioned at a designated height from the first disposing part 595a. In an embodiment, an antenna (e.g., a coil) for wireless power transmission may be received in the second disposing part 595b. The wireless power transmission antenna is electrically connected to the circuit device of the base part 591 through an electrical line disposed in the connecting part 593, and may generate an electromagnetic field and distribute the electromagnetic field in a designated area or space.

According to an embodiment, when a rechargeable secondary battery (e.g., the battery 189 or 333a of FIG. 1 or 7) is received in the second support 225, the accessory 202 may receive charging power from the charging cradle 509. The charging power from the charging cradle 509 may be supplied from the base part 591 to the accessory 202 through a charging cable (not illustrated). In an embodiment, when the accessory 202 includes a wireless power reception antenna embedded in the second support 225, the second support 225 may be positioned in the second disposing part 595b to receive power wirelessly. For example, when the second support 225 is positioned on the second disposing part 595b, the second support 225 (e.g., the wireless power reception antenna) may be positioned in the area where the electromagnetic field generated by the wireless power transmission antenna of the second placement 595b is distributed.

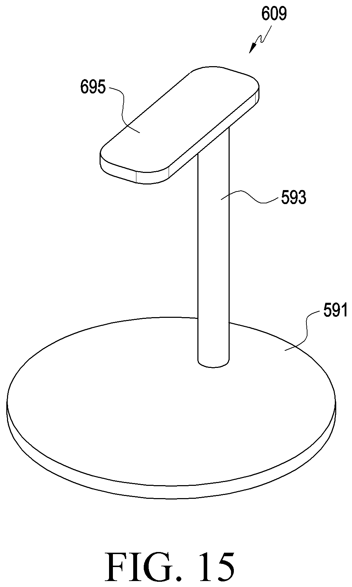

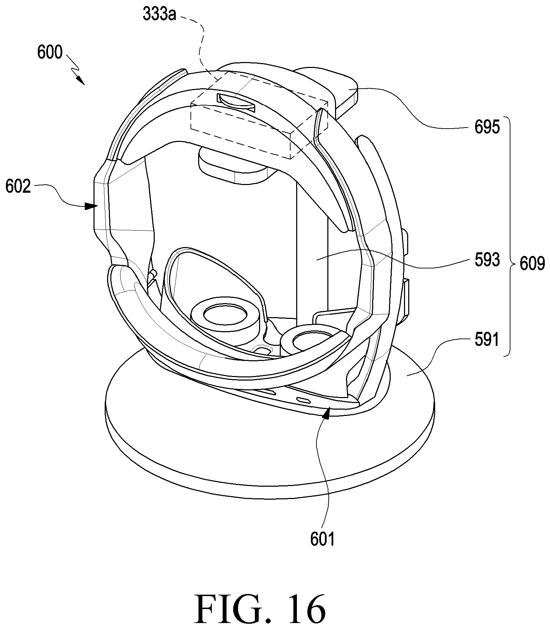

FIG. 15 is a perspective view illustrating a charging cradle 609 of an accessory 602 according to an embodiment of the disclosure. FIG. 16 is a perspective view illustrating a state in which an accessory 602 is mounted on a charging cradle 609 according to an embodiment of the disclosure.

Referring to FIGS. 15 and 16, a charging cradle 609 may include a base part 591, a connecting part 593, and/or an disposing part 695. Since the base part 591 and/or the connecting part 593 may be similar to the configuration of the charging cradle 509 of FIG. 14, a detailed description thereof is omitted. The accessory 602 has a substantially closed curve shape, and regardless of whether the wearable device 601 (e.g., the wearable device 201 of FIG. 2) is mounted on the accessory 602, the user U may hang the electronic device 600 and/or the accessory 602 on the charging cradle 609. For example, the shape or structure of the disposing part 695 may be simpler than that of the charging cradle 509 of FIG. 14, and a wireless power transmission antenna may be disposed in the disposing part 695. In an embodiment, the accessory 602 may be stored in a state of hanging on the disposing part 695, and in the state of hanging on the disposing part 695, charging power may be supplied through the wireless power transmission antenna embedded in the disposing part 695.

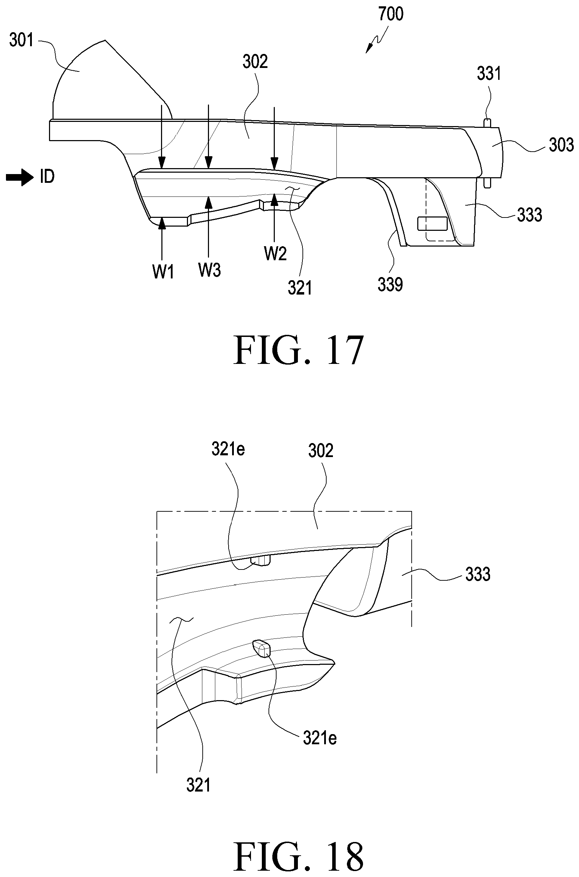

FIG. 17 is a side view illustrating an accessory according to an embodiment of the disclosure.

Referring to FIG. 17, in the accessory 700 (e.g., the accessory 202 of FIG. 2), the binding groove 321 may have a shape in which the width partially increases or decreases along the insertion direction ID of the wearable device (e.g., the wearable device 201 of FIG. 2). For example, the binding groove 321 may have a first width W1 at the entrance portion, and its width may gradually decrease along the insertion direction ID of the wearable device 201. In an embodiment, the width of the binding groove 321 may decrease to a second width W2 smaller than the first width W1 as it approaches the exit portion. For example, when the wearable device 201 is coupled to the accessory 700, the wearing frame (e.g., the wearing frame 212 of FIG. 2) may be easily aligned with the entrance of the binding groove 321, and the wearing frame 212 may be stably coupled to the cradling frame 302 by moving along the insertion direction ID. In an embodiment, the binding groove 321 from the point having the second width W2 to the exit portion may have the same width. For example, the binding groove 321 may have a maximum width (e.g., a first width W1) at the entrance portion and may have a minimum width (e.g., a second width W2) at the exit portion along the insertion direction ID. It should be noted that the shape of the binding groove 321 is exemplarily mentioned, and the embodiment(s) of the disclosure are not limited thereto.

According to an embodiment, the wearing frame 212 may have a third width W3 smaller than the first width W1. The third width W3 may be smaller than the second width W2 or substantially equal to the second width W2. Here, "the third width W3 may be substantially the same as the second width W2" may refer to stably coupling the wearable device 201 to the accessory 700 by bringing the wearing frame 212 in tight contact with the inner wall of the binding groove 321 in the space (e.g., inside the binding groove 321) having the second width W2. In an embodiment, when the wearing frame 212 is formed of an elastic material, it may have a width larger than the second width W2. For example, in the space with the second width W2, the wearing frame 212 may be partially compressed and may come in tight contact with the inner wall of the binding groove 321. As described above, the accessory 700 according to an embodiment of the disclosure may stably maintain the state in which the wearable device 201 is mounted while facilitating the mounting of the wearable device 201 using the width (e.g., the first width W1 and/or the second width W2) of the binding groove 321.

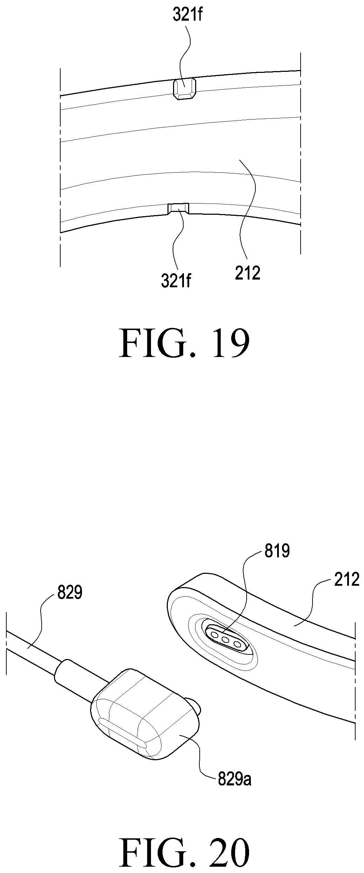

FIG. 18 is an enlarged view illustrating a portion of a cradling frame of an accessory according to an embodiment of the disclosure. FIG. 19 is an enlarged view illustrating a portion of a wearing frame of a wearable device mounted on an accessory according to an embodiment of the disclosure.

Referring to FIGS. 18 and 19, the electronic device (e.g., the electronic device 200 of FIG. 2) may further include a support protrusion 321e provided on the cradling frame 302 and a supporting recess 321f provided in the wearing frame 212. When the wearable device (e.g., the wearable device 201 of FIG. 2) is mounted on the accessory (e.g., the accessory 202 of FIG. 2) and reaches a designated position, the support protrusion 321e may be engaged with the support recess 321f. For example, when the wearable device 201 is coupled to the accessory 202, the support protrusion 321e and the support recess 321f may prevent the wearable device 201 from moving with respect to the accessory 202 along the insertion direction (e.g., the insertion direction ID of FIG. 17). For example, the support protrusion 321e and the support recess 321f may stably maintain the wearable device 201 in the state mounted on the accessory 202.

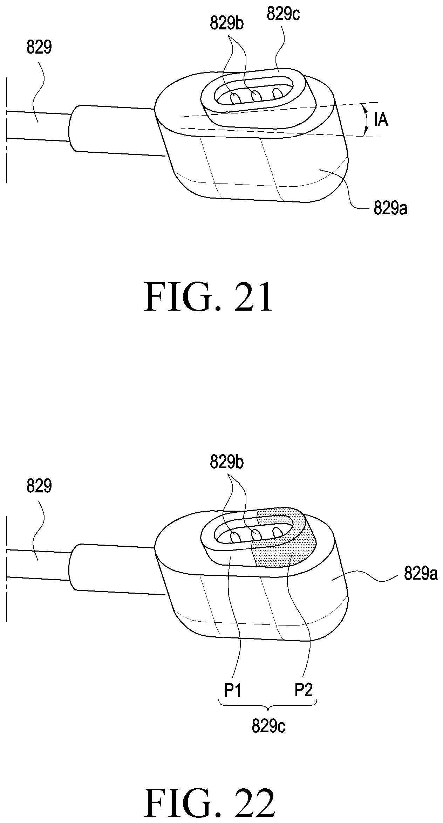

FIG. 20 is a perspective view illustrating a connection structure between an accessory and a wearable device according to an embodiment of the disclosure. FIG. 21 is a perspective view illustrating a cable or connector of an accessory according to an embodiment of the disclosure.

Referring to FIGS. 20 and 21, in a structure in which the accessory 202 and the wearable device 201 are electrically connected through the cable 829 (e.g., the cable 429 of FIG. 12), the cable 829 and/or the connector 829a (e.g., the connector 429a of FIG. 12) may include a contact terminal(s) 829b using elasticity, such as a leaf spring (e.g., the C-clip) or a pogo pin. The wearable device 201 may include a contact pad(s) 819 provided on the wearing frame 212, and the connector 829 (e.g., the contact terminal(s) 829b) may be electrically connected to the wearable device 201 through the contact pad(s) 819.

According to an embodiment, the accessory 202 may include a protrusion 829c disposed to surround the area in which the contact terminal(s) 829b are disposed. The protrusion 829c may protrude from the surface of the connector 829a to be at least partially inserted into the wearing frame 212, thereby maintaining the connector 829a in the state coupled to the wearing frame 212. In an embodiment, the protrusion 829c may include a permanent magnet. For example, the protrusion 829c may maintain the connector 829a in the state coupled to the wearing frame 212 by generating an attraction force by reacting with the magnetic substance provided in the wearing frame 212.

According to an embodiment, in a structure in which the connector 829 includes a plurality of contact terminals 829b, the protrusion 829c may have an asymmetric shape. In the illustrated embodiment, the upper surface of the protrusion 829c may be disposed to be inclined by a designated angle IA with respect to the surface of the connector 829a, and may thus be implemented in an asymmetric shape. For example, when the connector 829a is coupled to the wearing frame 212, it may be aligned in a designated direction by the asymmetric shape of the protrusion 829c. Here, "designated direction" may refer to a direction in which the contact terminal(s) 829b and the corresponding contact pad(s) 819 face each other. In an embodiment, when the connector 829a is aligned or coupled to the wearing frame 212 in a direction other than the designated direction, the contact terminal(s) 829b may not substantially contact the contact pad(s) 819.

FIG. 22 is a perspective view illustrating a cable or connector of an accessory according to an embodiment of the disclosure.

Referring further to FIG. 22, when the protrusion 829c includes a permanent magnet, the polarities may be asymmetrically disposed. For example, when the first portion P1 of the protrusion 829c is magnetized to the S pole, the second portion P2 of the protrusion 829c may be magnetized to the N pole. In an embodiment, when the first portion P1 of the protrusion 829c is magnetized to the N pole, the second portion P2 of the protrusion 829c may be magnetized to the S pole. In a structure in which the polarities of the protrusion 829c are asymmetrically disposed, the wearing frame 212 may couple the connector 829a to the wearing frame 212 in a state aligned in the designated direction by including a permanent magnet corresponding to the polarity of the protrusion 829c. In a structure in which the protrusion 829c and the wearing frame 212 include a permanent magnet, a repulsive force may occur between the protrusion 829c and the wearing frame 212 when the connector 829a is not aligned in the designated direction. For example, when not aligned in the designated direction, the connector 829a may not be substantially coupled to the wearing frame 212 due to the repulsive force between the protrusion 829c and the wearing frame 212.

According to an embodiment(s) of the disclosure, the electronic device (e.g., the electronic device 101 or 200 of FIGS. 1 to 3 and/or the accessory (e.g., the accessory 202 or 300 of FIGS. 2 to 4) may expand the performance or function of a wearable device (e.g., the wearable device 201 of FIG. 2) that itself may be used while being worn on the user's body. For example, depending on the use environment, the electronic device and/or the accessory may provide various types of use of the wearable device. In an embodiment, the accessory may extend the usage time of the wearable device by providing auxiliary power (e.g., operating power or charging power) to the wearable device. In an embodiment, in a state of being mounted on the accessory, the wearable device may be provided with auxiliary power or a more advanced communication environment.

Effects of the disclosure are not limited to the foregoing, and other unmentioned effects would be apparent to one of ordinary skill in the art from the description of the foregoing embodiment(s).

According to an embodiment of the disclosure, an accessory (e.g., the accessory 202 or 300 of FIGS. 2 to 4) configured to mount a wearable device (e.g., the electronic device 101 of FIG. 1 or the wearable device 201 of FIG. 2) may comprise a first support (e.g., the first support 221 or 301of FIGS. 2 to 4) and cradling frames (e.g., the cradling frame 223 or 302 of FIGS. 2 to 4) extending side by side from the first support. In an embodiment, the cradling frames may be configured to dispose a display unit (e.g., the display unit 211 of FIG. 2) of the wearable device adjacent to the first support by receiving a corresponding one of wearing frames (e.g., the wearing frame 212 of FIG. 2) of the wearable device.

According to an embodiment, the accessory may further comprise a first cushion member (e.g., the first cushion member 411 of FIG. 9) provided on an inner surface of the first support and configured to contact a user's body.

According to an embodiment, the accessory may further comprise a second support (e.g., the second support 225 or 303 of FIGS. 2 to 4) coupled to an end portion of the cradling frames. In an embodiment, the first support, the cradling frames, and the second support may be arranged to form a closed loop shape.

According to an embodiment, at least one of the cradling frames may be configured to slide with respect to the second support.

According to an embodiment, the accessory may further comprise a battery (e.g., the battery 189 or 333a of FIG. 1 or 7)) received in the second support. In an embodiment, the accessory may be configured to supply power from the battery to the wearable device.

According to an embodiment, the accessory may further comprise a second cushion member (e.g., the second cushion member 225b or 339 of FIG. 2 or 9) provided on an inner surface of the second support and configured to contact a user's body.

According to an embodiment, the accessory may further comprise binding grooves (e.g., the binding groove 223a or 321 of FIG. 2 or 4) provided in the cradling frames. In an embodiment, the binding grooves may be configured to receive or dispose at least a portion of any one of the wearing frames of the wearable device.

According to an embodiment, the accessory may further comprise a pressing member (e.g., the pressing member 321b or 321c of FIG. 5 or 6) disposed on the binding groove. In an embodiment, the pressing member may be configured to maintain a state in which any one of the wearing frames of the wearable device is disposed in the binding groove.

In an embodiment, the accessory may comprise a pair of pressing members. In an embodiment, the accessory may be configured to receive or dispose a portion of any one of the wearing frames of the wearable device between the pair of pressing members.

According to an embodiment, the accessory may further comprise a permanent magnet (e.g., the permanent magnet 321d of FIG. 7 or 8) disposed adjacent to the binding groove. In an embodiment, the permanent magnet on the binding groove may be configured to generate an attraction force with any one of the wearing frames of the wearable device.

According to an embodiment, the accessory may further comprise at least one contact terminal (e.g., the contact terminal 427a or 427b of FIG. 11) exposed inside the binding groove. In an embodiment, the contact terminal may be configured to electrically contact any one of the wearing frames of the wearable device.

According to an embodiment, the accessory may further comprise an avoidance recess (e.g., the avoidance recess 223b or 323 of FIG. 2 or 4) formed in at least one of the cradling frames and provided on one side of the binding groove and a cable (e.g., the cable 429 of FIG. 12) configured to be electrically connected to any one of the wearing frames of the wearable device through the avoidance recess.

According to an embodiment, the accessory may further comprise a second support coupled to an end portion of the cradling frames and, together with the first support and the cradling frames, forming a closed loop shape and a battery received in the second support. **In an** embodiment, the cable may be configured to extend from the second support and supply power between the battery and the wearing frame.

According to an embodiment, the cradling frames may further include a guide frame (e.g., the guide frame 421 of FIG. 10) extending from the first support and a slide frame (e.g., the slide frame 423 of FIG. 10) coupled to the guide frame. In an embodiment, the slide frame may be configured to slide closer to or farther from the first support while being guided by the guide frame.

According to an embodiment of the disclosure, an electronic device (e.g., the electronic device 101 or 200 of FIGS. 1 to 3) may comprise a wearable device (e.g., the wearable device 201 of FIG. 2) configured to be worn on a user's body by including a display unit (e.g., the display unit 211 of FIG. 2) and wearing frames (e.g., the wearing frame 212 of FIG. 2) extending from the display unit and an accessory (e.g., the accessory 202, 300, 400, or 602 of FIGS. 2 to 4, FIG. 7, FIGS. 9 and 10, and/or FIG. 16) configured to be worn on the user's body and configured to mount the wearable device. In an embodiment, the accessory may include a first support (e.g., the first support 221 or 301 of FIGS. 2 to 4) and cradling frames (e.g., the cradling frame 223 or 302 of FIGS. 2 to 4) extending side by side from the first support. In an embodiment, the cradling frames may be configured to dispose the display unit adjacent to the first support by receiving a corresponding one of the wearing frames.

According to an embodiment, in state in which the wearable device is mounted on the accessory, the accessory may be configured to be worn on the user's body to align at least a portion of the display unit in a direction toward the user's face.

According to an embodiment, the accessory may further comprise binding grooves (e.g., the binding groove 223a or 321 of FIG. 2 or 4) provided in the cradling frames. In an embodiment, the binding grooves may be configured to receive or dispose at least a portion of any one of the wearing frames.

According to an embodiment, in state in which the wearing frames are disposed in any one of the binding grooves, the cradling frames may at least partially be disposed in a space between the wearing frames.

According to an embodiment, the accessory may further comprise a second support (e.g., the second support 225 or 303 of FIGS. 2 to 4) coupled to an end portion of the cradling frames. In an embodiment, the first support, the cradling frames, and the second support may be arranged to form a closed loop shape.

According to an embodiment, the accessory may further comprise a battery (e.g., the battery 189 or 333a of FIG. 1 or 7)) received in the second support. In an embodiment, power may be supplied from the battery to the wearable device.

While the disclosure has been described and shown in connection with an embodiment thereof, it should be appreciated that an embodiment is intended as limiting the invention but as illustrative. It will be apparent to one of ordinary skill in the art that various changes may be made in form and detail without departing from the overall scope of the disclosure, including the appended claims and their equivalents.

## Claims

1. An accessory (202; 300; 400; 602) configured to mount a wearable device (201), comprising:
a first support (221; 301; 401); and
cradling frames (223; 302; 402) extending side by side from the first support,
wherein the cradling frames are configured to dispose a display unit (211) of the wearable device adjacent to the first support by receiving a corresponding one of wearing frames (212) of the wearable device.

2. The accessory of claim 1, further comprising a first cushion member (411) provided on an inner surface of the first support and configured to contact a user's body.

3. The accessory of claim 1 or 2, further comprising a second support (225; 303; 403) coupled to an end portion of the cradling frames,
wherein the first support, the cradling frames, and the second support are arranged to form a closed loop shape.

4. The accessory of claim 3, wherein at least one of the cradling frames is configured to slide with respect to the second support.

5. The accessory of claim 3 or 4, further comprising a battery (189; 333a) received in the second support,
wherein the accessory is configured to supply power from the battery to the wearable device.

6. The accessory of any one of claims 3 to 5, further comprising a second cushion member (225b; 339) provided on an inner surface of the second support and configured to contact a user's body.

7. The accessory of any one of claims 1 to 6, further comprising binding grooves (223a; 321) provided in the cradling frames,
wherein the binding grooves are configured to receive or dispose at least a portion of any one of the wearing frames of the wearable device.

8. The accessory of claim 7, further comprising a pressing member (321b; 321c) disposed on the binding groove,
wherein the pressing member is configured to maintain a state in which any one of the wearing frames of the wearable device is disposed in the binding groove.

9. The accessory of claim 8, comprising a pair of pressing members,
wherein the accessory is configured to receive or dispose a portion of any one of the wearing frames of the wearable device between the pair of pressing members.

10. The accessory of any one of claims 7 to 9, further comprising a permanent magnet (321d) disposed adjacent to the binding groove,
wherein the permanent magnet on the binding groove is configured to generate an attraction force with any one of the wearing frames of the wearable device.

11. The accessory of any one of claims 7 to 10, further comprising at least one contact terminal (427a, 427b) exposed inside the binding groove,
wherein the contact terminal is configured to electrically contact any one of the wearing frames of the wearable device.

12. The accessory of any one of claims 7 to 11, further comprising:
an avoidance recess (223b; 323) formed in at least one of the cradling frames and provided on one side of the binding groove; and
a cable (429) configured to be electrically connected to any one of the wearing frames of the wearable device through the avoidance recess.

13. The accessory of claim 12, further comprising:
a second support coupled to an end portion of the cradling frames and, together with the first support and the cradling frames, forming a closed loop shape; and
a battery received in the second support,
wherein the cable is configured to extend from the second support and supply power between the battery and the wearing frame.

14. The accessory of any one of claims 1 to 13, wherein the cradling frames further include:
a guide frame (421) extending from the first support; and
a slide frame (423) coupled to the guide frame, and
wherein the slide frame is configured to slide closer to or farther from the first support while being guided by the guide frame.

15. An electronic device (101; 200), comprising:
a wearable device (201) configured to be worn on a user's body by including a display unit (211) and wearing frames (212) extending from the display unit; and
the accessory (202; 300; 400) of any one of claims 1 to 14, configured to be worn on the user's body and configured to mount the wearable device,
wherein in a state in which the wearable device is mounted on the accessory, the accessory is configured to be worn on the user's body to align at least a portion of the display unit in a direction toward the user's face.
